(19) **Europäisches Patentamt**

**European Patent Office**

**Office européen des brevets**

(11) **EP 1 395 628 B1**

(12) **EUROPEAN PATENT SPECIFICATION**

(45) Date of publication and mention
of the grant of the patent:
**16.08.2006 Bulletin 2006/33**

(51) Int Cl.:
*C08J 5/18* (2006.01)     *B29C 55/08* (2006.01)
*B29D 7/01* (2006.01)     *B01D 71/10* (2006.01)

(21) Application number: **02738160.7**

(22) Date of filing: **11.06.2002**

(86) International application number:
**PCT/EP2002/006390**

(87) International publication number:
**WO 2002/100925 (19.12.2002 Gazette 2002/51)**

(54) **METHOD FOR THE PRODUCTION OF CELLULOSIC FLAT FILMS**

**VERFAHREN ZUR HERSTELLUNG VON CELLULOSEFILME**

**PROCEDE DE PRODUCTION DE FILMS CELLULOSIQUES PLANS**

(84) Designated Contracting States:
**AT BE CH CY DE DK ES FI FR GB GR IE IT LI LU MC NL PT SE TR**

(30) Priority: **12.06.2001 AT 9072001**

(43) Date of publication of application:
**10.03.2004 Bulletin 2004/11**

(73) Proprietor: **LENZING AKTIENGESELLSCHAFT**
**4860 Lenzing (AT)**

(72) Inventors:
• **RÜF, Hartmut**
  **A-4840 Vöcklabruck (AT)**
• **FIRGO, Heinrich**
  **A-4840 Vöcklabruck (AT)**

(74) Representative: **Nemec, Harald**
**Kopecky & Schwarz**
**Wipplingerstrasse 32/22**
**1010 Wien (AT)**

(56) References cited:
**WO-A-97/24215**          **WO-A-99/21700**
**AT-B- 405 407**          **GB-A- 689 395**
**US-A- 2 698 967**        **US-A- 4 784 186**
**US-B1- 6 177 035**

• **E. MOUNT III: "Encyclopedia of polymer science and technology. Films Manufacture" 1987 , WILEY-INTERSCIENCE , NEW YORK XP002210659 ISBN: 0-471-80649-8 Vol. 7 page 98 -page 100**

**Description**

The present invention relates to the production of cellulosic flat films via the so-called amine-oxide process.

In this process a solution of cellulose in an aqueous tertiary amine oxide is shaped into the form of a film by means of an extrusion die with an elongated extrusion gap. The shaped solution is transported into a precipitation bath via an air gap. In the precipitation bath the coagulation of the cellulose takes place and the cellulosic flat film is formed.

The cellulosic flat film thus produced is washed and dried. Known processes for the production of cellulosic flat films via the amine-oxide process are disclosed for example in PCT-WO 98/49223, PCT-WO 98/49224 and PCT-WO 99/21700. Cellulosic films produced via the amine-oxide process may be used for a variety of applications, including as membrane applications as disclosed in EP 0 807 460, in a battery separator as disclosed in PCT-WO 97/37392 or in tubular food casings as for example disclosed in US-A 5,658,524.

From PCT-WO 98/49224 an improved process is known, wherein the cellulosic flat film is stretched in the transversal direction after having entered the precipitation bath. By stretching the cellulosic flat film in the transversal direction after having entered the precipitation bath, the mechanical properties of the film can be improved. Furthermore, the usefulness of the film as a membrane in separation processes is enhanced.

According to PCT-WO 98/49224 stretching in the transversal direction is preferably performed after the washing step and before the drying step. One typical process includes the steps of stretching the washed film in the transversal direction in a continuously operating stenter frame and then drying the stretched film in a contact dryer.

However, it has now been observed that the dimensional stability of films produced according to the state of the art, especially when exposed to liquids such as water or aqueous alkali, is still less than desired, i.e. certain shrinkage of the film occurs when exposed to such liquids. Especially for the usage of films as a membrane in separation processes or in a battery separator a higher dimensional stability when exposed to liquids would be highly desired.

For the purposes of the present specification, if negative values for the dimensional stability of a films are given, this means that shrinkage in transversal and/or longitudinal direction occurs.

It is, therefore, an object of the present invention to provide a process of the above described kind, wherein a better dimensional stability of the cellulosic flat films especially when exposed to liquids can be achieved. Furthermore, it is an object of the present invention to provide cellulosic flat films produced via the amine-oxide process with better mechanical properties and better suitability for the use as a membrane in separation processes or in a battery separator.

The method according to the invention, comprising the steps of

- shaping a solution of cellulose in an aqueous tertiary amine oxide into the form of a film by means of an extrusion die with an elongated extrusion gap
- transporting the shaped solution via an air gap into a precipitation bath, whereupon the cellulosic flat film is formed in said precipitation bath,
- stretching the cellulosic flat film in the transversal direction after having entered the precipitation bath,
- washing the cellulosic flat film and
- drying the cellulosic flat film,

is characterized in that stretching in the transversal direction is performed in two steps, wherein in the first step the flat film is stretched to a stretching degree being higher than the stretching degree finally desired, and in the second step the flat film is allowed to relax to the stretching degree finally desired.

I.e. given a finally desired stretching degree such as 200%, the film is in a first step stretched up to a degree higher than the degree finally desired, such as for example 300%, and is then in a second step allowed to relax to the desired stretching degree of 200%. For the purposes of the present invention the percentages given for the stretching degree are based on the width of the unstretched film. Therefore, a stretching degree of for example 200% means that the stretched film has a width of 3 times the width of the unstretched film (100% + 200%).

It has surprisingly been shown that with the method of the present invention the dimensional stability of thus produced flat films in liquids such as water or aqueous alkali can be significantly improved, thus making the films even more suitable for applications such as a membrane in a separation process or especially in a battery separator.

Preferably in the second step of stretching, the flat film is allowed to relax continuously. The flat film may also be allowed to relax stepwise in the second step of stretching.

Relaxation of the film is preferably carried out in a controlled manner, i.e. the film is kept under a certain transversal tension whilst being allowed to relax. This can for example be accomplished by continuing to hold the film at its edges in a stenter frame.

In the first step of transversal stretching the flat film is preferably stretched to a stretching degree being at least 50% higher, more preferred at least 100% higher than the stretching degree finally desired.

The final stretching degree of the cellulosic flat film may be 350%.

In a further preferred embodiment of the method according to the invention the transversally stretched cellulosic flat film is during the steps following the transversal stretching at least partly exposed to a transversal tension sufficient to substantially prevent transversal shrinkage.

Preferably the cellulosic flat film is dried while being exposed to transversal tension to a moisture content of less than 200%, more preferred less than 100%, and especially preferred less than 50% (w/w based on weight of cellulose). The film can also be dried completely while being exposed to said transversal tension.

Surprisingly, it has been found that if the transversally stretched cellulosic flat film is at least partly exposed to transversal tension, especially during the drying step, shrinkage in transversal direction can be significantly reduced in comparison with hitherto known processes. Furthermore TD (transverse direction) tenacity of the films can thereby be significantly increased without substantially influencing MD (machine direction) tenacity.

For one skilled in the art it is easily possible to determine the degree of transversal tension necessary to substantially prevent the transversal shrinkage of the film. Such transversal tension can for example be applied by fastening the film at its edges and thereby keeping the film at its original width.

By determining whether transversal tension is to be applied throughout the steps following the transversal stretching, for example throughout a drying step, or only partly during said steps, i.e. during drying only until a specific degree of moisture is achieved, one can easily influence and control the total degree of transversal shrinkage and also the relation between tenacity in MD and TD directions of the finally obtained film.

One especially preferred embodiment of the present invention is characterized in that the cellulosic flat film is at least partly dried whilst being stretched in the transversal direction. Thereby the steps of transversal stretching and drying are at least partly combined.

The cellulosic flat film is stretched in the transversal direction preferably after the film has left the precipitation bath and has been washed. Especially when the drying of the film is carried out at least partly during the step of transversally stretching the film, it is preferred to stretch the film after having left the precipitation bath and having been washed. However, it is to be understood that stretching in transversal direction may also be performed at other stages of the process, e.g. before washing.

The cellulosic flat film may also be first dried and then re-wetted and stretched in transversal direction whilst again being dried at least partly.

Preferably, residual moisture in the cellulosic flat film is removed after the film has been stretched in the transversal direction.

One embodiment of the present invention comprises the steps of stretching the film in transversal direction in a continuously operating stenter frame and drying the film at least partly in said stenter frame while and/or after being stretched. I.e., the film may first be stretched in transversal direction in the stenter frame and is then kept in the stenter frame under transversal tension in order to prevent transversal shrinkage while being at least partly dried.

Residual moisture (if there is any) of the film leaving the stenter frame is then removed in a further dryer, for example a contact dryer.

Drying the film while being exposed to transversal tension may be performed in one step or in several steps and may be accomplished in one single apparatus or several apparatuses capable of drying films.

Transversal stretching of the cellulosic flat film is preferably performed in a continuously operating stenter frame.

Preferably the shaped solution is stretched in the longitudinal direction whilst being transported through the air gap.

The cellulosic flat film may be treated with a softener, preferably after washing. It is also possible to incorporate softeners into the extrusion solution, which are resistant to the chemical and physical conditions of the extrusion solution and the precipitation bath.

As the tertiary amine oxide, N-methyl-morpholine-N-oxide (NMMO) is preferably used.

The present invention furthermore encompasses a cellulosic flat film which is obtainable by the method according to the present invention.

The cellulosic flat films according to the invention are especially characterized by having a thickness d of 15 $\mu$m or less and exhibiting a factor f of 40 or less, preferably 35 or less wherein f is defined as f = d * (MD/TD), wherein d is inserted in $\mu$m and wherein MD is the tenacity of the film in machine direction (N/mm$^2$) and TD is the tenacity of the film in transversal direction (N/mm$^2$). Preferably, the cellulosic flat films have a thickness d of 10 $\mu$m or less.

From PCT-WO 00/24812 cellulosic flat films with a thickness d of less than 20 $\mu$m and exhibiting a factor f of 65 or less are known. However, according to PCT-WO 00/24812 a film having a thickness of only 9 $\mu$m exhibits a factor f of 65 and films with thicknesses of 11 and 13 $\mu$m exhibit factors f of 45 and 46, respectively. With the present invention it is now possible to provide very thin films with yet more balanced MD/TD tenacity properties, rendering such films competitive against comparable synthetic films.

Cellulosic flat films obtainable by the method of the invention are characterized by a dimensional stability in transverse direction with a value of greater than -10% when exposed to water (as measured according to the test method described below in regard to the examples).

Furthermore, cellulosic flat films obtainable by the method of the invention are characterized by a dimensional stability in transverse direction with a value of greater than -15% when exposed to 40% KOH (as measured according to the test method described below in regard to the examples).

I.e., the films according to the invention only show very small shrinkage when exposed to water or aqueous alkali.

In some cases even an expansion of the films according to the invention when exposed to water and/or aqueous alkaline solutions has been observed, i.e. the values for the dimensional stability are positive.

It can be shown that the dimensional stability of the films according to the invention when exposed to water and/or aqueous alkaline solutions tends to be even greater when the degree of transversal stretching of the film during its production process is held at a comparatively lower level such as lower than 100 %. This means that one skilled in the art by controlling the parameters of transversal stretching, relaxation, and preventing shrinkage after transversal stretching can adjust the properties of the obtained film within a wide variety ranging from films with lower TD tenacity but well suited for use e.g. as a battery separator in aqueous and/or alkaline media up to thin films with very high and balanced MD and TD tenacities.

The present invention furthermore relates to the use of a cellulosic flat film according to the invention as a packaging film, agricultural film, diaper film, office film, household film, in battery separators and/or as a membrane.

Examples

Example 1

A solution of cellulose in NMMO (13 % w/w Cellulose) which was prepared by methods known in the art was extruded through a flat film die having an extrusion gap length of 40 cm and and an extrusion gap width of 300 $\mu$m. The shaped solution whilst being stretched in the longitudinal direction at a stretch ratio of 3.2:1 was transported through an air gap into a precipitation bath where coagulation of the cellulose and formation of the cellulosic flat film occurred.

After washing out the NMMO the washed film was stretched in transversal direction in a continuously working stretching apparatus, the stretching degree finally desired being 150%.

In the stretching apparatus, the film was in accordance with the present invention first stretched to a stretching degree being higher than the stretching degree finally desired and was afterwards allowed to relax in a controlled manner to the stretching degree finally desired, with the film being kept under tension in the stretching apparatus. The film was then dried while being kept under tension at a stretching degree of 150 %.

In a comparison example, the film was stretched to the stretching degree finally desired in one step.

The dimensional stability in TD direction of the thus produced films when exposed to $H_2O$ and 40% KOH was measured as follows:

Depending on the width of the film 5 to 6 samples having a dimension of 20 x 30 mm were punched out of the film at locations equally distributed over the width of the film. The exact dimension of the samples in TD direction was determined by measuring with a microscope/image analysis.

The samples were placed in a beaker with deionized water or 40% KOH, respectively, at room temperature such that the samples were totally immersed in the liquid. The samples were left immersed in the liquid for 30 minutes in the case of water and for 1 hour in the case of 40% KOH.

After removing the samples from the liquid the dimension in TD direction was measured again as described above.

Dimensional Stability of the samples is calculated according to the following formula:

$$\text{Dimensional Stability (\%)} = \frac{(L_2 - L_1)}{L_1} * 100,$$

where $L_1$ is the initial length (TD direction) before immersion and $L_2$ is the corresponding length (TD direction) after immersion in the test liquid. Then the mean average of the values obtained is calculated.

In this regard it is to be noted that in the case of films having been dried in a cylinder dryer (where free relaxation at the edges of the film takes place), samples taken from the edges of the film should not be included in the calculation of the mean average.

The results of the experiments are shown in Table 1:

Table 1

| Example | Degree of stretching in the first part of the stretching apparatus (%) | Relaxation in the second part of the stretching apparatus (%) | Final degree of stretching at the outlet of the stretching apparatus (%) | Dimensional stability in $H_2O$ (%) | Dimensional stability in 40% KOH (%) |
|---|---|---|---|---|---|
| 1.1 (C) | 150 | 0 | 150 | -13.2 | -16.9 |
| 1.2 | 200 | 50 | 150 | -6.6 | -13.2 |
| 1.3 | 250 | 100 | 150 | 0 | -7.1 |

As can be seen from table 1, transverse shrinkage of the films when exposed to $H_2O$ or KOH can be significantly reduced when the films are stretched according to the present invention (examples 1.2 and 1.3) as compared with comparison example 1.1.

Example 2

A cellulosic flat film was produced wherein the parameters of extrusion, longitudinally stretching in the air gap, precipitation and washing were the same as in example 1.

After washing out the NMMO of the formed film, the film was stretched to a stretching degree of 150% in a continuously working stretching apparatus.

In the stretching apparatus the film was in a comparison example not dried while being transversally stretched and in the examples according to the present invention at least partly dried.

After leaving the stretching apparatus the film was finally dried in a frame, whereby the film is allowed to shrink in transverse direction under a load of 50 g/cm.

The moisture content of the film when leaving the stretching apparatus was determined. Furthermore, shrinkage of the film in transversal direction after stretching and drying was calculated.

Tenacities of the produced films in machine direction (MD) and in transversal direction (TD) were measured with a Materials Tester Type Z 2.5/TN 1P (obtainable from company Zwick; crosshead speed 100 mm/min, sample width 15 mm, determination of sample thickness with Schröder Micrometer) and the relationship between MD and TD tenacities was calculated.

Table 2 contains the data obtained from the above described experiments:

Table 2

| Ex. | Moisture (% on cellulose) after stretching apparatus | Total Shrinkage (%) | Tenacity dry (MD) (N/mm$^2$) | Tenacity dry (TD) (N/mm$^2$) | Tenacity MD/TD |
|---|---|---|---|---|---|
| 2.1 (C) | 253 | -47.8 | 375.9 | 142.0 | 2.65 |
| 2.2 | 133 | -38.9 | 333.9 | 152.4 | 2.19 |
| 2.3 | 95 | -36.6 | 322.0 | 134.1 | 2.40 |
| 2.4 | 80 | -31.5 | 337.3 | 155.2 | 2.17 |
| 2.5 | 62 | -26.1 | 360.3 | 152.2 | 2.37 |
| 2.6 | 37 | -21.6 | 328.6 | 162.3 | 2.02 |
| 2.7 | 16 | 0.0 | 375.7 | 219.6 | 1.71 |

As can be seen from example 2.1, which is a comparison example, the flat film which has not been exposed to transversal tension while being dried exhibits significant total shrinkage in transverse direction.

Furthermore, it can be seen from examples 2.2 to 2.7 where the film was dried to different moisture contents while being stretched transversally, that total shrinkage can be significantly reduced or even totally avoided (cf. example 2.7, where the film was nearly completely dried whilst being transversally stretched). Furthermore, it is observed that TD tenacity of the thus produced films is improved while MD tenacity is not influenced significantly.

Example 3:

A solution of cellulose in NMMO (13 % w/w cellulose) which was prepared by methods known in the art was extruded through a flat film die having an extrusion gap length of 100 cm and an extrusion gap width of 250 $\mu$m. The shaped solution whilst being stretched in the longitudinal direction at a stretch ratio of 2.5:1 was transported through an air gap into a precipitation bath where coagulation of the cellulose and formation of the cellulosic flat film occurred. After washing out the NMMO of the formed film, the film was stretched in transversal direction to a stretching degree of 155% in a continuous stretching apparatus, partially dried in this continuous stretching apparatus to a moisture of 50% (on cellulose) while being exposed to transversal tension and afterwards allowed to relax to a final stretching degree of 39% during drying in a cylinder dryer.

The results of this experiment are shown in Table 3:

Table 3

| Film thickness d ($\mu$m) | Dimensional Stability in $H_2O$ (%) | Dimensional Stability in 40% KOH (%) | Tenacity MD dry (N/mm$^2$) | Tenacity TD dry (N/mm$^2$) | Factor f = d*MD/TD |
|---|---|---|---|---|---|
| 15 | 10.6 | -0.7 | 290 | 125 | 35 |

Example 4:

A solution of cellulose in NMMO (13 % w/w cellulose) which was prepared by methods known in the art was extruded through a flat film die having an extrusion gap length of 100 cm and an extrusion gap width of 100 $\mu$m. The shaped solution whilst being stretched in the longitudinal direction at a stretch ratio of 1.3:1 was transported through an air gap into a precipitation bath where coagulation of the cellulose and formation of the cellulosic flat film occurred. After washing out the NMMO of the formed film, the film was stretched in transversal direction to a stretching degree of 135% in a continuous stretching apparatus, partially dried in this continuous stretching apparatus to a moisture of 50% (on cellulose) while being exposed to transversal tension and afterwards allowed to relax to a final stretching degree of 35% during drying in a cylinder dryer.

The results of this experiment are shown in Table 4:

Table 4

| Film thickness d ($\mu$m) | Dimensional Stability in $H_2O$ (%) | Dimensional Stability in 40% KOH (%) | Tenacity MD dry (N/mm$^2$) | Tenacity TD dry (N/mm$^2$) | Factor f = d*MD/TD |
|---|---|---|---|---|---|
| 10 | 1.0 | -3.9 | 328 | 110 | 30 |

**Claims**

1. Method for the production of cellulosic flat films, comprising the steps of

    - shaping a solution of cellulose in an aqueous tertiary amine oxide into the form of a film by means of an extrusion die with an elongated extrusion gap
    - transporting the shaped solution via an air gap into a precipitation bath, whereupon the cellulosic flat film is formed in said precipitation bath,
    - stretching the cellulosic flat film in the transversal direction after having entered the precipitation bath,
    - washing the cellulosic flat film and
    - drying the cellulosic flat film,

    **characterized in that** stretching in the transversal direction is performed in two steps, wherein in the first step the flat film is stretched to a stretching degree being higher than the stretching degree finally desired, and in the second step the flat film is allowed to relax to the stretching degree finally desired.

2. Method according to claim 1, **characterized in that** in the second step of stretching the flat film is allowed to relax continuously.

3. Method according to claim 1, **characterized in that** in the second step of stretching the flat film is allowed to relax stepwise.

4. Method according to any one of claims 1 to 3, **characterized in that** in the first step of stretching the flat film is stretched to a stretching degree being at least 50% higher than the stretching degree finally desired.

5. Method according to any one of claims 1 to 3, **characterized in that** in the first step of stretching the flat film is stretched to a stretching degree being at least 100% higher than the stretching degree finally desired.

6. Method according to any one of claims 1 to 5, **characterized in that** the stretching degree finally desired is up to 350%.

7. Method according to any one of claims 1 to 6, **characterized in that** the transversally stretched cellulosic flat film is during the steps following the transversal stretching at least partly exposed to a transversal tension sufficient to substantially prevent transversal shrinkage.

8. Method according to claim 7, **characterized in that** the cellulosic flat film is dried while being exposed to transversal tension to a moisture content of less than 200 % (w/w based on weight of cellulose).

9. Method according to claim 7 or 8, **characterized in that** the cellulosic flat film is dried while being exposed to transversal tension to a moisture content of less than 100 % (w/w based on weight of cellulose).

10. Method according to claim 7 or 8, **characterized in that** the cellulosic flat film is dried while being exposed to transversal tension to a moisture content of less than 50 % (w/w based on weight of cellulose).

11. Method according to any one of claims 7 to 10, **characterized in that** the cellulosic flat film is at least partly dried whilst being stretched in the transversal direction.

12. Method according to any one of claims 1 to 11, **characterized in that** the cellulosic flat film is stretched in the transversal direction after the film has left the precipitation bath and has been washed.

13. Method according to any one of claims 7 or 12, **characterized in that** residual moisture in the cellulosic flat film is removed after the film has been stretched in the transversal direction.

14. Method according to any one of claims 1 to 13, **characterized in that** stretching is performed in a continuously operating stenter frame.

15. Method according to any one of claims 1 to 14, **characterized in that** the shaped solution is stretched in the longitudinal direction whilst being transported through the air gap.

16. Method according to any one of claims 1 to 15, **characterized in that** the cellulosic flat film is treated with a softener.

17. Method according to claim 16, **characterized in that** the film is treated with a softener after washing.

18. Method according to any one of claims 1 to 17, **characterized in that** the tertiary amine oxide is N-methyl-morpholine-N-oxide (NMMO).

19. Cellulosic flat film obtainable by a method according to any one of claims 1 to 18 and **characterized by** having a thickness d of 15 $\mu$m or less and exhibiting a factor f of 40 or less, preferably 35 or less, wherein f is defined as f = d * (MD/TD), wherein d is inserted in $\mu$m and wherein MD is the tenacity of the film in machine direction (N/mm$^2$) and TD is the tenacity of the film in transversal direction (N/mm$^2$).

20. Cellulosic flat film obtainable by a method according to claims l to 18 and **characterized by** a dimensional stability in transversal direction with a value of greater than -10% when exposed to water.

21. Cellulosic flat film obtainable by a method according to any one of claims 1 to 18 and **characterized by** a dimensional stability in transversal direction with a value of greater than -15% when exposed to 40% KOH.

22. Cellulosic flat film according to any of claims 19 to 21, **characterized by** having a thickness d of 10 $\mu$m or less.

23. Use of a cellulosic flat film according to any one of claims 19 to 22 as a packaging film, agricultural film, diaper film office film, household film, in battery separators and/or as a membrane.

**Patentansprüche**

1. Verfahren zur Herstellung von cellulosischen Flachfolien, umfassend die Schritte:

   - Folienartiges Ausformen einer Lösung von Cellulose in einem wässrigen tertiären Aminoxid mittels einer Extrusionsdüse mit einem länglichen Extrusionsspalt,
   - Transportieren der geformten Lösung über einen Luftspalt in ein Fällbad, wobei im Fällbad die cellulosische Flachfolie gebildet wird,
   - Verstrecken der cellulosischen Flachfolie in Querrichtung nach dem Eintritt in das Fällbad,
   - Waschen der cellulosischen Flachfolie und
   - Trocknen der cellulosischen Flachfolie,

   **dadurch gekennzeichnet, dass** das Verstrecken in Querrichtung in zwei Schritten durchgeführt wird, wobei im ersten Schritt die Flachfolie auf einen Verstreckungsgrad verstreckt wird, der höher als der gewünschte Endverstreckungsgrad ist, und wobei man im zweiten Schritt die Flachfolie auf den gewünschten Endverstreckungsgrad entspannen lässt.

2. Verfahren gemäß Anspruch 1, **dadurch gekennzeichnet, dass** man im zweiten Schritt des Verstreckens die Flachfolie kontinuierlich entspannen lässt.

3. Verfahren gemäß Anspruch 1, **dadurch gekennzeichnet, dass** man im zweiten Schritt des Verstreckens die Flachfolie schrittweise entspannen lässt.

4. Verfahren gemäß einem der Ansprüche 1 bis 3, **dadurch gekennzeichnet, dass** im ersten Schritt des Verstreckens die Flachfolie auf einen Verstreckungsgrad verstreckt wird, der zumindest 50% höher als der gewünschte Endverstreckungsgrad ist.

5. Verfahren gemäß einem der Ansprüche 1 bis 3, **dadurch gekennzeichnet, dass** im ersten Schritt des Verstreckens die Flachfolie auf einen Verstreckungsgrad verstreckt wird, der zumindest 100% höher als der gewünschte Endverstreckungsgrad ist.

6. Verfahren gemäß einem der Ansprüche 1 bis 5, **dadurch gekennzeichnet, dass** der gewünschte Endverstreckungsgrad bis zu 350% beträgt.

7. Verfahren gemäß einem der Ansprüche 1 bis 6, **dadurch gekennzeichnet, dass** die querverstreckte cellulosische Flachfolie während der Schritte nach dem Querverstrecken zumindest teilweise einer Spannung in Querrichtung ausgesetzt wird, welche ausreichend ist, um eine Schrumpfung in Querrichtung im wesentlichen zu verhindern.

8. Verfahren gemäß Anspruch 7, **dadurch gekennzeichnet, dass** die cellulosische Flachfolie, während sie einer Spannung in Querrichtung ausgesetzt wird, auf einen Feuchtigkeitsgehalt von weniger als 200 Gew.% (bezogen auf Cellulose) getrocknet wird.

9. Verfahren gemäß Anspruch 7 oder 8, **dadurch gekennzeichnet, dass** die cellulosische Flachfolie, während sie einer Spannung in Querrichtung ausgesetzt wird, auf einen Feuchtigkeitsgehalt von weniger als 100 Gew.% (bezogen auf Cellulose) getrocknet wird.

10. Verfahren gemäß Anspruch 7 oder 8, **dadurch gekennzeichnet, dass** die cellulosische Flachfolie, während sie einer Spannung in Querrichtung ausgesetzt wird, auf einen Feuchtigkeitsgehalt von weniger als 50 Gew.% (bezogen auf Cellulose) getrocknet wird.

11. Verfahren gemäß einem der Ansprüche 7 bis 10, **dadurch gekennzeichnet, dass** die cellulosische Flachfolie zumindest teilweise getrocknet wird, während sie in Querrichtung verstreckt wird.

12. Verfahren gemäß einem der Ansprüche 1 bis 11, **dadurch gekennzeichnet, dass** die cellulosische Flachfolie in Querrichtung verstreckt wird, nachdem die Folie das Fällbad verlassen hat und gewaschen wurde.

**13.** Verfahren gemäß einem der Ansprüche 7 oder 12, **dadurch gekennzeichnet, dass** restliche Feuchtigkeit in der cellulosischen Flachfolie entfernt wird, nachdem die Folie in Querrichtung verstreckt wurde.

**14.** Verfahren gemäß einem der Ansprüche 1 bis 13, **dadurch gekennzeichnet, dass** das Verstrecken in einem kontinuierlich arbeitenden Spannrahmen durchgeführt wird.

**15.** Verfahren gemäß einem der Ansprüche 1 bis 14, **dadurch gekennzeichnet, dass** die geformte Lösung während des Transports durch den Luftspalt in Längsrichtung verstreckt wird.

**16.** Verfahren gemäß einem der Ansprüche 1 bis 15, **dadurch gekennzeichnet, dass** die cellulosische Flachfolie mit einem Weichmacher behandelt wird.

**17.** Verfahren gemäß Anspruch 16, **dadurch gekennzeichnet, dass** die Folie nach dem Waschen mit einem Weichmacher behandelt wird.

**18.** Verfahren gemäß einem der Ansprüche 1 bis 17, **dadurch gekennzeichnet, dass** das tertiäre Aminoxid N-Methyl-Morpholin-N-Oxid (NMMO) ist.

**19.** Cellulosische Flachfolie, erhältlich durch ein Verfahren gemäß einem der Ansprüche 1 bis 18 und **dadurch gekennzeichnet, dass** sie eine Dicke d von 15 $\mu$m oder weniger hat und einen Faktor f von 40 oder weniger, bevorzugt 35 oder weniger, aufweist, wobei f definiert ist als f = d* (MD/TD), wobei d in $\mu$m eingesetzt wird und wobei MD die Festigkeit der Folie in Längsrichtung (N/mm$^2$) und TD die Festigkeit der Folie in Querrichtung (N/mm$^2$) bedeuten.

**20.** Cellulosische Flachfolie, erhältlich durch ein Verfahren gemäß einem der Ansprüche 1 bis 18 und **gekennzeichnet durch** eine Dimensionsstabilität in Querrichtung mit einem Wert von größer als -10%, wenn die Folie Wasser ausgesetzt wird.

**21.** Cellulosische Flachfolie, erhältlich durch ein Verfahren gemäß einem der Ansprüche 1 bis 18 und **gekennzeichnet durch** eine Dimensionsstabilität in Querrichtung mit einem Wert von größer als -15%, wenn die Folie 40%-iger KOH ausgesetzt wird.

**22.** Cellulosische Flachfolie gemäß einem der Ansprüche 19 bis 21, **dadurch gekennzeichnet, daß** sie eine Dicke von 10 $\mu$m oder weniger hat.

**23.** Verwendung einer cellulosischen Flachfolie gemäß einem der Ansprüche 19 bis 22 als Verpackungsfolie, Agrarfolie, Windelfolie, Bürofolie, Haushaltsfolie, in Batterieseparatoren und/oder als eine Membran.

## Revendications

**1.** Procédé de production de films cellulosiques plans, comprenant les étapes consistant à

- façonner une solution de cellulose dans une solution aqueuse d'oxyde d'amine tertiaire sous la forme d'un film au moyen d'une filière ayant une fente d'extrusion oblongue,
- transporter la solution façonnée via une fente d'air dans un bain de précipitation, après quoi le film cellulosique plan est formé dans ledit bain de précipitation,
- étirer le film cellulosique plan dans le sens transversal après qu'il soit entré dans le bain de précipitation,
- laver le film cellulosique plan, et
- sécher le film cellulosique plan,

**caractérisé en ce que** l'étirement dans le sens transversal est effectué en deux étapes, dans lesquelles dans la première étape le film plan est étiré à un degré d'étirement supérieur au degré d'étirement finalement souhaité, et dans la seconde étape le film plan peut se relâcher au degré d'étirement finalement souhaité.

**2.** Procédé selon la revendication 1, **caractérisé en ce que** dans la seconde étape d'étirement le film plan peut se relâcher en continu.

**3.** Procédé selon la revendication 1, **caractérisé en ce que** dans la seconde étape d'étirement le film plan peut se relâcher par paliers.

**4.** Procédé selon l'une quelconque des revendications 1 à 3, **caractérisé en ce que** dans la première étape d'étirement le film plan est étiré à un degré d'étirement au moins 50 % supérieur au degré d'étirement finalement souhaité.

**5.** Procédé selon l'une quelconque des revendications 1 à 3, **caractérisé en ce que** dans la première étape d'étirement le film plan est étiré à un degré d'étirement au moins 100 % supérieur au degré d'étirement finalement souhaité.

**6.** Procédé selon l'une quelconque des revendications 1 à 5, **caractérisé en ce que** le degré d'étirement finalement souhaité va jusqu'à 350 %.

**7.** Procédé selon l'une quelconque des revendications 1 à 6, **caractérisé en ce que** le film cellulosique plan transversalement étiré est pendant les étapes suivant l'étirement transversal au moins en partie exposé à une tension transversale suffisante pour substantiellement empêcher un retrait transversal.

**8.** Procédé selon la revendication 7, **caractérisé en ce que** le film cellulosique plan est séché pendant son exposition à une tension transversale à une teneur en humidité inférieure à 200 % (m/m sur la base du poids de la cellulose).

**9.** Procédé selon la revendication 7 ou 8, **caractérisé en ce que** le film cellulosique plan est séché pendant son exposition à une tension transversale à une teneur en humidité inférieure à 100 % (m/m sur la base du poids de la cellulose).

**10.** Procédé selon la revendication 7 ou 8, **caractérisé en ce que** le film cellulosique plan est séché pendant son exposition à une tension transversale à une teneur en humidité inférieure à 50 % (m/m sur la base du poids de la cellulose).

**11.** Procédé selon l'une quelconque des revendications 7 à 10, **caractérisé en ce que** le film cellulosique plan est au moins en partie séché pendant son étirement dans le sens transversal.

**12.** Procédé selon l'une quelconque des revendications 1 à 11, **caractérisé en ce que** le film cellulosique plan est étiré dans le sens transversal une fois que le film a quitté le bain de précipitation et a été lavé.

**13.** Procédé selon l'une quelconque des revendications 7 ou 12, **caractérisé en ce que** l'humidité résiduelle dans le film cellulosique plan est éliminée une fois que le film a été étiré dans le sens transversal.

**14.** Procédé selon l'une quelconque des revendications 1 à 13, **caractérisé en ce que** l'étirement est effectué dans une rame d'étirage à marche continue.

**15.** Procédé selon l'une quelconque des revendications 1 à 14, **caractérisé en ce que** la solution façonnée est étirée dans le sens longitudinal pendant son transport par l'intermédiaire de la fente d'air.

**16.** Procédé selon l'une quelconque des revendications 1 à 15, **caractérisé en ce que** le film cellulosique plan est traité avec un assouplissant.

**17.** Procédé selon la revendication 16, **caractérisé en ce que** le film est traité avec un assouplissant après lavage.

**18.** Procédé selon l'une quelconque des revendications 1 à 17, **caractérisé en ce que** l'oxyde d'amine tertiaire est le N-oxyde de N-méthylmorpholine (NMMO).

**19.** Film cellulosique plan qui peut être obtenu par un procédé selon l'une quelconque des revendications 1 à 18 et **caractérisé en ce qu'**il a une épaisseur d de 15 $\mu$m ou moins et qu'il présente un facteur f de 40 ou moins, de préférence de 35 ou moins, où f est défini par f = d * (SM/ST), où d est inséré en $\mu$m et où SM est la ténacité du film dans le sens machine (N/mm$^2$) et ST est la ténacité du film dans le sens transversal (N/mm$^2$).

**20.** Film cellulosique plan qui peut être obtenu par un procédé selon l'une quelconque des revendications 1 à 18 et **caractérisé par** une stabilité dimensionnelle dans le sens transversal avec une valeur supérieure à -10 % lorsqu'il est exposé à l'eau.

**21.** Film cellulosique plan qui peut être obtenu par un procédé selon l'une quelconque des revendications 1 à 18 et **caractérisé par** une stabilité dimensionnelle dans le sens transversal avec une valeur supérieure à -15 % lorsqu'il est exposé à du KOH à 40 %.

**22.** Film cellulosique plan selon l'une quelconque des revendications 19 à 21, **caractérisé en ce qu'**il a une épaisseur d de 10 $\mu$m ou moins.

**23.** Utilisation d'un film cellulosique plan selon l'une quelconque des revendications 19 à 22 comme film d'emballage, film agricole, film pour couche, film de bureau, film ménager, dans des séparateurs de batteries et/ou comme membrane.